# EUROPEAN PATENT APPLICATION

(11) **EP 2 490 226 A1**
(43) Date of publication of application: **22.08.2012**
(21) Application number: 12156253.2
(22) Date of filing: 20.02.2012
(51) Int. Cl.: G21C 19/20

(54) **Operation method of connection part between container body and cover**

(30) Priority: 21.02.2011 JP 2011034870
(71) Applicant: Mitsubishi Heavy Industries, Ltd., Minato-ku Tokyo (JP)
(72) Inventor: Sato, Tomonobu, Tokyo (JP); Shichida, Tomonori, Tokyo (JP)
(74) Representative: Intès, Didier Gérard André

(57) **Abstract**

Atmospheric conditions can be efficiently formed within a cavity (2), and as a result improvements in the operation efficiency within the cavity can be achieved. The operation method is an operation including: a step for detaching a cover in an underwater environment; a step for arranging a fuel rod housing (4) having an upper aperture, in an underwater environment; a step for inserting fuel rods (13) into the fuel rod housing (4); a step for closing the upper aperture of the fuel rod housing (4) such that it is water-tight; a step for draining water (W) of the cavity; and a step for executing a repair operation on a flange seat surface of a connection part between a container body and the cover in an atmospheric environment.

## Description

### BACKGROUND OF THE INVENTION

### Field of the Invention

The present invention relates to a method for performing an operation at a connection part between a container body and a container body cover of a nuclear reactor vessel, having a container body having an aperture at an upper portion and a cover that closes the upper aperture of the container body.
Priority is claimed on Japanese Patent Application No. 2011-034870, filed February 21, 2011, the content of which is incorporated herein by reference.

### Description of Related Art

Conventionally, nuclear reactor vessels are formed from a drum section and a cover. This drum section is closely contacted with the cover to thereby seal the interior of the nuclear reactor vessel and maintain a high pressure. Further, the drum section has a flat drum-side flange seat surface. In the cover there is formed a circular inside groove that is positioned such that it surrounds the interior of the nuclear reactor vessel, and additionally a circular outside groove that is positioned such that it surrounds the outside of the inside groove, and O-rings are respectively provided therein.

In such a nuclear power plant, periodic inspections are periodically performed in order to ensure its safety and reliability. With regard to the periodic inspections, faster and more efficient inspections had been performed in order to improve the working rate of the plant, and in order to reduce the dose equivalent of the external exposure of the workers. Further, also for the drum-side flange seat surface mentioned above, periodic inspections are performed in order to ensure the sealing property thereof, and the presence of damages on the sealing surface are checked for, and repairs are performed.

An operation performed under an atmospheric environment in a nuclear reactor vessel is disclosed in Patent Document 1 for example.
Patent Document 1 discloses an operation in which, within a nuclear reactor vessel in a state where the cooling water has been drained to a lower position of a nozzle, there is installed a frame having an aperture matching the position of the nozzle, on a side surface, and then following insertion of a cylindrical shield body from the aperture into the nozzle, a welded portion is cut by inserting a cutting device into the nozzle.

### [Prior Art Documents]

### [Patent Documents]

[Patent Document 1] Japanese Unexamined Patent Application, First Publication No. 2006-349596.

### [Problems to be Solved by the Invention]

In a conventional operation within a cavity, there are the following problems.
That is to say, with regard to the flange seat surface in the drum section of a nuclear reactor vessel, there is a need to perform repairs in order to ensure the sealing thereof, and although the checks are periodically performed, in the current state these are performed manually. However, in this operation since the exposure is large, it is an operation performed within a limited time. Hence there is a problem in that it takes a long time, and that the operation efficiency is low.
Furthermore, conventionally a cylindrical shield body, such as that of Patent Document 1, is provided for the nuclear reactor vessel, the shield body and the interior of the nuclear reactor vessel is made an atmospheric environment, and shielding of the interior thereof from water in the cavity is performed. However this becomes a large scale operation, and the time taken for this operation is long.
Consequently, an operation method has been needed in which atmospheric conditions within the cavity can be formed by an efficient and simple method, and which uses a dedicated repairing device under the atmospheric conditions. However there are presently no appropriate methods, and there is room for improvement in these respects.

### SUMMARY OF THE INVENTION

The present invention takes into consideration the above problems, with an object of providing an operation method at a connection part between a container body and a cover, wherein atmospheric conditions can be efficiently formed within the cavity, and improvements in the operation efficiency within the cavity can be achieved.

### [Means for Solving the Problem]

The operation method of a connection part between a container body and a cover according to the present invention is a method for performing an operation at a connection part between a container body and a container body cover of a nuclear reactor vessel, having a container body having an aperture at an upper portion and a cover that closes the upper aperture of the container body, wherein there is provided:
a step for detaching the cover in an underwater environment;
a step for arranging a fuel rod housing having an upper aperture, in an underwater environment;
a step for inserting a fuel rods into the fuel rod housing;
a step for closing the upper aperture of the fuel rod housing such that it is water-tight;
a step for draining water of a cavity; and
a step for executing an operation at the connection part in an atmospheric environment.

In the present invention, by housing the fuel rods in a fuel rod housing within a cavity, which is under an underwater environment, and closing this such that it is water-tight, it is possible to shield the exterior of the fuel rod housing from the interior space thereof. Consequently, by draining the interior of the cavity, it is possible to efficiently and easily make the interior of the cavity an atmospheric environment. Accordingly, it becomes possible to perform an operation at the connection part between a container body and a cover of a container body of a nuclear reactor vessel, using devices that only run in an atmospheric environment, and it is possible to achieve increases in efficiency of the operation.

Furthermore, in the operation method at a connection part between a container body and a cover according to the present invention, preferably the operation at the connection part is surface finishing of a sealing surface.

In the present invention, the operation of surface finishing of the sealing surface, which demands flattening accuracy, can be performed under an atmospheric environment. Therefore inspections during the operation can be performed easily and with high accuracy compared to an operation under an underwater environment.

Furthermore, in the operation method at a connection part between a container body and a cover according to the present invention, preferably the step for closing the upper aperture of the container body is provided before the step for executing an operation at the connection part.

In this case, the upper aperture of the container body is closed during the operation at the connection part. Therefore it is possible to prevent problems, instruments, tools, and the like, being dropped into the container body during the operation, and it is possible to perform the execution with certainty and a good efficiency.

### [Effects of the Invention]

According to the operation method at a connection part between a container body and a cover of the present invention, by containing the fuel rods in the fuel rod housing within the cavity which is under an underwater environment, such that it is water-tight, and shielding the interior of the fuel rod housing from the exterior thereof, it is possible to drain the interior of the cavity and efficiently form an atmospheric environment. Consequently, the operation at a connection part between a container body and a cover of a container body of a nuclear reactor vessel can be performed under an atmospheric environment with good efficiency and high accuracy.

### BRIEF DESCRIPTION OF THE DRAWINGS

FIG. 1 is a side view showing a general overview of an operation state according to an embodiment of the present invention.
FIG. 2 is a fragmentary perspective view showing a flange seat surface of a container body.
FIG. 3 is a vertical cross-sectional view of the fuel rod housing shown in FIG. 1.
FIG. 4 is a perspective view showing a milling processing state of the flange seat surface.
FIG. 5 is a drawing showing the section R of FIG. 4, and is a perspective view showing a milling processing state by a repairing device.
FIG. 6A is a drawing describing the process of the operation method.
FIG. 6B is a drawing describing the process of the operation method.
FIG. 7 is a drawing describing the process of the operation method following FIG. 6B.

### DETAILED DESCRIPTION OF THE INVENTION

Hereunder, is a description of an operation method at a connection part between a container body and a cover according to an embodiment of the present invention, based on the drawings.

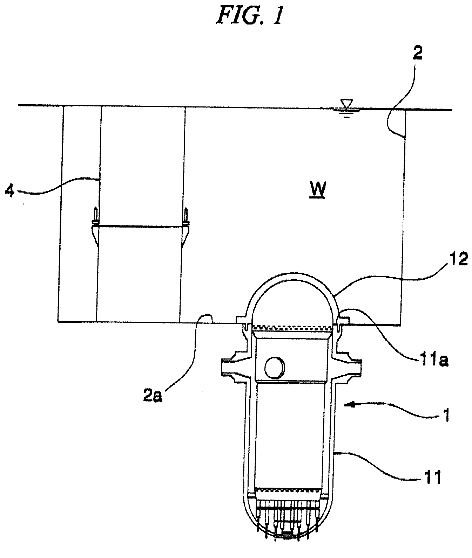

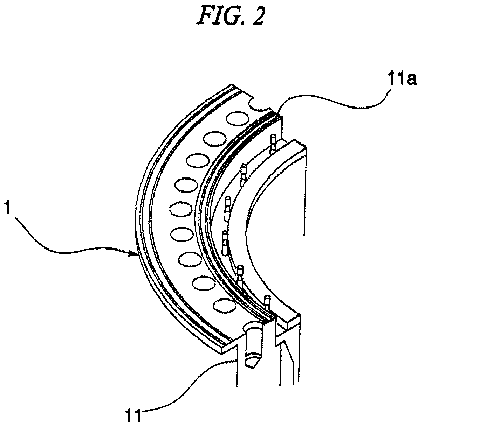

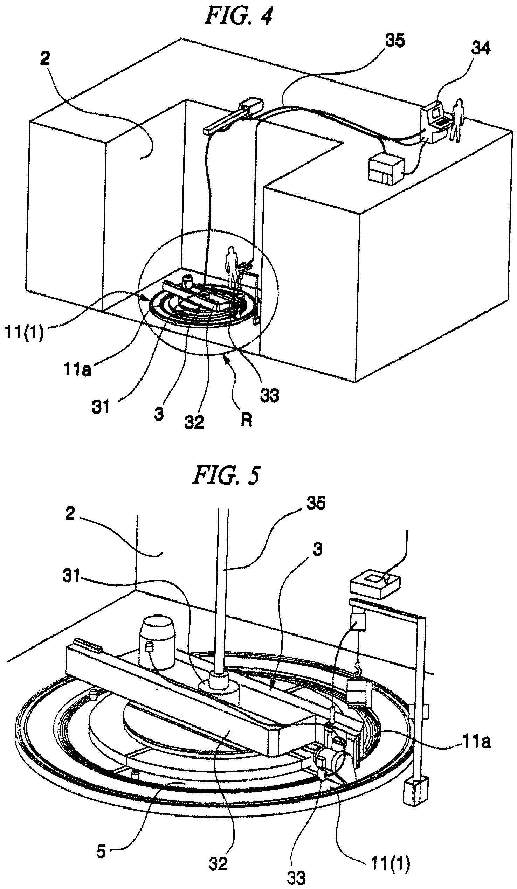

As shown in FIG. 1, the operation method at a connection part between a container body and a cover according to the present embodiment is employed for a nuclear reactor vessel 1 arranged within a cavity 2 in a nuclear power plant.
Specifically, the nuclear reactor vessel 1 is furnished with a container body 11 having an aperture at an upper portion, and a cover 12 that closes the upper aperture, and is one in which a repairing operation is performed by means of milling processing of a flange seat surface 11a (sealing surface), which is shown in FIG. 2, of the connection part between the container body 11 and the cover 12 using a dedicated repairing device 3 (refer to FIG. 5) in an atmospheric environment.
Here, the cavity 2 in which the nuclear reactor vessel 1 is installed, is in a state where it always filled with water W.

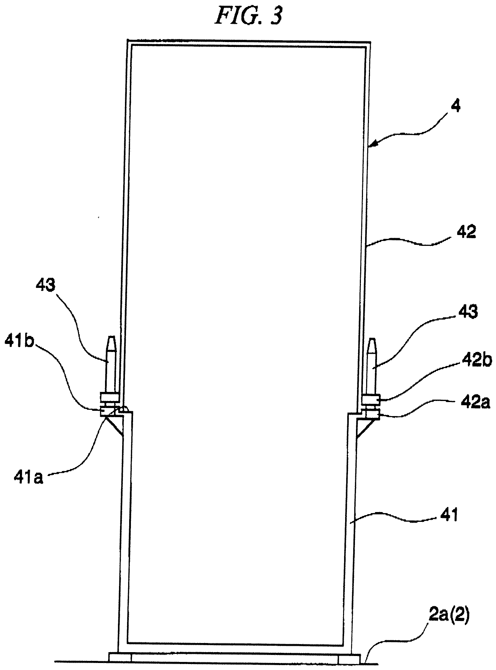

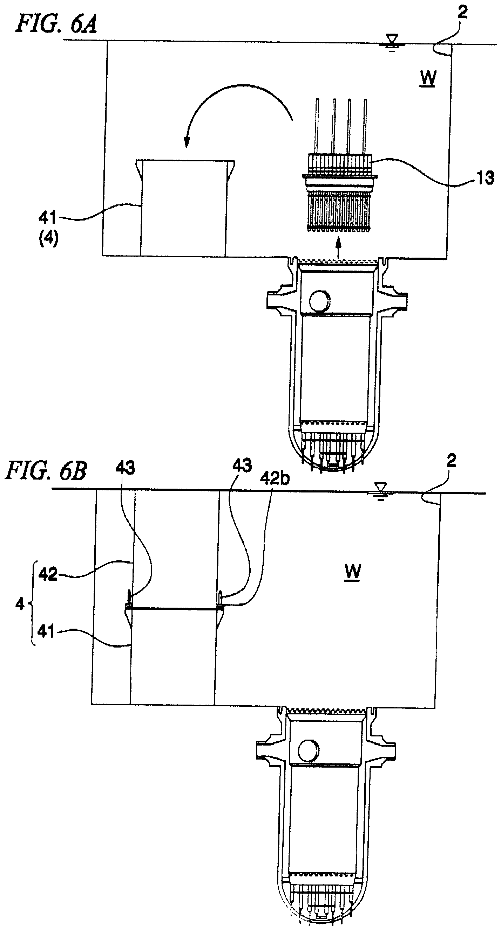

Reference symbol 4 shown in FIG. 1 denotes a fuel rod housing for temporarily housing and storing fuel rods 13 (refer to FIG. 6A) of the nuclear reactor vessel 1 for the operation, and is used mounted on the bottom portion 2a of the cavity 2.
As shown in FIG. 3, this fuel rod housing 4 has a configuration in which a bottomed cylindrical lower tank 41 and a bottomed cylindrical upper tank 42 are engaged such that they are water-tight above and below by matching their respective apertures 41a and 42b. In other words, the upper aperture 41a of the lower tank 41 mounted on the bottom portion 2a of the cavity 2 is closed by the upper tank 42.
On the upper edge outer circumferential portion of the lower tank 41 there is provided an upper edge rib 41b that projects outwards around the entire circumference, and a plurality of guide pins 43 are provided upright on the upper edge rib 41b around the circumferential direction with a predetermined spacing. On the lower edge outer circumferential portion of the upper tank 42 there is provided a guide ring 42b which projects outwards around the entire circumference, and has seating holes at positions that correspond to the guide pins 43 such that they are insertable. Furthermore, a packing (not shown in the drawing) is provided on the upper aperture 41a of the lower tank 41 such that water-tightness between the lower tank 41 and the upper tank 42 can be obtained.

As shown in FIG. 4 and FIG. 5, the repairing device 3 is generally configured with: a rotating part 31 which is attached coaxial with the container body 11 of the nuclear reactor vessel 1 and is rotatable, and has a built-in rotation drive motor; a device body 32 that extends in the radial direction and is centered on the rotating part 31; and a cutting portion 33 provided on one longitudinal end of the device body 32. The rotating part 31 is supplied from the exterior with a power source for the rotation drive motor, and a control cable 35 for operating the rotation and the like of the device body 32 by means of a control board 34 provided as a separate body to the repairing device 3.

In the present embodiment, the rotating part 31 is attachable to a shielding plate 5 which closes the upper aperture after the fuel rods 13 are extracted from the container body 11. Further, in a state with the rotating part 31 attached to the shielding plate 5, the cutting part 33 is arranged at a predetermined position on the device body 32 such that it makes a facing contact surface on the flange seat surface 11a of the container body 11. As the repairing device 3, a device manufactured by Framatome Co. can be used for example.

Next, a specific operation method at a connection part between a container body and a cover is described in detail, based on the drawings.
Firstly, as shown in FIG. 1, within the cavity 2 which is under an underwater environment, the cover 12 of the nuclear reactor vessel 1 is detached. Consequently, this gives a state in which the flange seat surface 11a which is positioned at the connection part between the container body 11 and the cover 12, is exposed to the interior of the cavity 2.

Then, as shown in FIG. 6A, the lower tank 41 of the fuel rod housing 4 is arranged in a predetermined position in the cavity 2. The lower tank 41 may be arranged in the cavity 2 before detaching the cover 12.
Next, the fuel rods 13 are extracted from the container body 11 and inserted into the lower tank 41. The upper aperture of the container body 11 is closed by means of a temporary cover (not shown in the drawing).

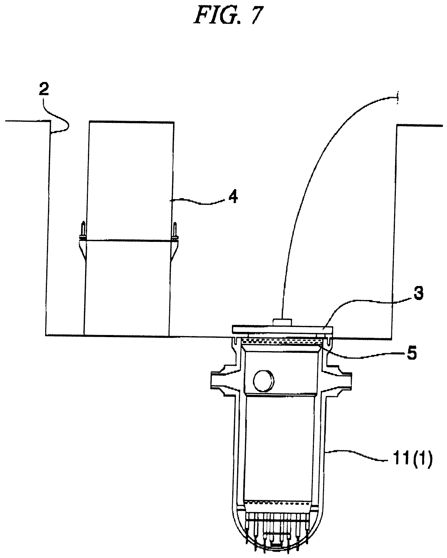

Then, as shown in FIG. 3 and FIG. 6B, the guide pins 43 of the lower tank 41 are inserted into and engaged with the seating holes of the guide ring 42b of the upper tank 42. As a result, the upper aperture 41a of the lower tank 41 can be closed such that it is water-tight, and the fuel rods 13 housed inside the fuel rod housing 4 are stored in a state in which they are shielded by the water W of the outside.
Further, as shown in FIG. 7, after the closed state of the fuel rod housing 4 is confirmed, the water within the cavity 2 is drained to thereby make the cavity 2 an atmospheric environment.

Next, as shown in FIG. 4 and FIG. 5, in the atmospheric environment formed within the cavity 2, an operation for applying surface finishing to the flange seat surface 11a is executed using the repairing device 3.
Specifically, firstly the temporary cover that temporarily closed the upper aperture of the container body 11 is detached, and instead, the upper aperture is closed by means of the shielding plate 5 to which the rotating part 31 of the repairing device 3 is attachable. Thereafter, the repairing device 3 is suspendingly lowered to the shielding plate 5 within the cavity 2, which is in an atmospheric environment, and is installed (refer to FIG. 7) such that it is coaxial with the container body 11, and in a state in which it is rotatable about the central axis (container axis) thereof. At this time, with regard to the repairing device 3, the control board 34 is arranged on the cavity 2, and operation instructions and the like from the control board 34 are sent to the repairing device 3 inside the cavity 2 by means of the control cable 35.

Further, the repairing device 3 is positioned by leveling and centering such that the cutting part 33 is in a position to make a contact surface on the flange seat surface 11a. Thereafter, by rotating the device body 32 and rotating the cutting part 33 along the surface of the flange seat surface 11a, flattening of the flange seat surface 11a is performed. For this flattening, for example after milling (primary processing) has been performed, the grindstone of the cutting part 33 is changed and finishing processing (secondary processing) is performed.

Once the processing by the repairing device 3 has been finished, the nuclear reactor vessel 1 is returned to an operating state by a reverse sequence to the operation sequence mentioned above. That is to say, the shielding plate 5 which is installed on the upper aperture of the container body 11 is moved together with the repairing device 3 to outside of the cavity 2, and a temporary cover is installed on the upper aperture. Next, water W is filled into the cavity 2, and after the temporary cover is removed, the upper tank 42 of the fuel rod housing 4 is opened, the fuel rods 13 are returned into the container body 11, and the cover 12 is attached to the container body 11. Furthermore, the utilized fuel rod housing 4 is moved to the outside of the cavity 2, and the operation according to the present embodiment becomes completed.

In this manner, by housing the fuel rods 13 in the fuel rod housing 4 within the cavity 2, which is under an underwater environment, and closing this such that it is water-tight, the exterior of the fuel rod housing 4 can be shielded from the interior space thereof. Consequently, the interior of the cavity 2 can be drained, and the interior of the cavity 2 can be made an atmospheric environment. Accordingly, at the connection part between the cover 12 and the container body 11 of the nuclear reactor vessel 1, it becomes possible to perform operations using devices that can only be run in an atmospheric environment. Hence improvements in the operation efficiency can be achieved.

Further, the surface finishing operation of the flange seat surface 11a which demands flattening accuracy, can be performed under an atmospheric environment. Therefore inspections during the operation can be performed easily and with high accuracy compared to an operation under an underwater environment.
Moreover, the upper aperture of the container body 11 is closed during the operation at the connection part. Therefore it is possible to prevent problems, instruments, tools, and the like, being dropped into the container body 11 during the operation, and it is possible to perform the execution with certainty and good efficiency.

In the operation method at a connection part between a container body and a cover, according to the present embodiment mentioned above, the fuel rods 13 are contained in the fuel rod housing 4 within the cavity 2, which is under an underwater environment, such that it is water-tight, and the interior of the fuel rod housing 4 is shielded from the exterior thereof. As a result it is possible to drain the interior of the cavity 2 and efficiently form an atmospheric environment. Consequently, the operation at the connection part between the container body 11 of the nuclear reactor vessel 1 and the cover 12 can be performed under an atmospheric environment with good efficiency and high accuracy.

The foregoing has described an embodiment of an operation method at a connection part between a container body and a cover, according to the present invention. However the present invention is in no way limited to the embodiment mentioned above, and appropriate changes are possible within a range that does not depart from the gist thereof.
For example, in the present embodiment, an operation that repairs the flange seat surface 11a of the container body 11 is the subject. However, the present invention is in no way limited to this execution, and as long as it is an operation at the connection part between the container body 11 and the cover 12, it is not particularly restricted. Consequently, also with regard to the dedicated repairing device 3 of the present embodiment, the present invention is in no way limited to this device, and it is possible to use a repairing device of another configuration. Furthermore, it is acceptable for the repair to be performed by a manual operation without using the repairing device 3.

Moreover, the construction of the fuel rod housing 4 that houses the fuel rods 13 is in no way limited to the construction of the present embodiment where the lower tank 41 and the upper tank 42 are engaged, and one with any appropriate construction may be employed. For example, the construction may be such that the upper aperture of a tank with a bottomed cylindrical shape and having a height dimension capable of completely housing the fuel rods 13, is closed by a cover such that it is water-tight.
In addition, within a range that does not depart from the gist of the present invention, the components in the embodiment mentioned above may be appropriately substituted with well-known components, and furthermore, they may be appropriately combined with the embodiment mentioned above.

### [Brief Description of the Reference Symbols]

1 Nuclear reactor vessel
2 Cavity
3 Repairing device
4 Fuel rod housing
5 Shielding plate
11 Container body
11a Flange seat surface (sealing surface)
12 Cover
13 Fuel rods
31 Rotating part
32 Device body
33 Cutting part
41 Lower tank
41a Upper aperture
42 Upper tank

## Claims

1. A preparation method for performing an arbitrary operation with respect to a connection part between a container body of a nuclear reactor vessel (1) and a cover (12) after exposure of the connection part of the container body (11) in a method where the connection part is exposed, the preparation method being **characterized in that** it comprises the steps of:
detaching said cover (12) from said container body (11) within water filling a cavity (2);
arranging a fuel rod housing (4) having an aperture at an upper portion, within the water;
transferring fuel rods (13) housed within the container body (11) to the fuel rod housing (4) via the aperture thereof;
closing the aperture of the fuel rod housing (4) while maintaining water-tightness; and
draining water from the cavity so as to expose the connection part of the container body (11), wherein
the arbitrary operation with respect to the connection part is performed thereafter.

2. The preparation method according to claim 1, wherein the operation with respect to said connection part is surface finishing of a sealing surface (11a).

3. The preparation method according to either one of claim 1 and claim 2, wherein there is further provided a step for closing the aperture of said container body (11) before the operation with respect to said connection part.
